# EUROPEAN PATENT APPLICATION

(11) **EP 4 742 388 A1**
(43) Date of publication of application: **13.05.2026**
(21) Application number: 25176470.0
(22) Date of filing: 14.05.2025
(51) Int. Cl.: H01M 50/169, H01M 50/184, H01M 10/04, H01M 50/105, H01M 50/186, H01M 50/609

(54) **METHOD AND MOLD FOR SEALING POUCH-TYPE BATTERIES AND POUCH-TYPE BATTERY**

(30) Priority: 12.11.2024 KR 20240160594
(71) Applicant: SAMSUNG SDI CO., LTD., Yongin-si, Gyeonggi-do 17084 (KR)
(72) Inventor: LEE, Jehyun, 17084 Yongin-si (KR); JUNG, Chan Yoon, 17084 Yongin-si (KR); SONG, Hojin, 17084 Yongin-si (KR); JANG, Yoonsoo, 17084 Yongin-si (KR)
(74) Representative: Marks & Clerk LLP

(57) **Abstract**

A method of sealing a pouch-type battery includes: a top sealing operation including sealing an upper region of a sealing part of a pouch above an electrode assembly receiving part thereof; a post-electrolyte-injection sealing operation including sealing the sealing part at one side of the electrode assembly receiving part after injecting an electrolyte into an electrode assembly; and a post-degassing sealing operation including sealing a remaining side of the sealing part at an opposite side of the electrode assembly receiving part after removing gas from the electrode assembly receiving part. In the top sealing operation, a gap between the sealing part and the electrode assembly receiving part is substantially the same both at each upper corner of the electrode assembly receiving part and along the upper region between the upper corners of the electrode assembly receiving part.

## Description

### BACKGROUND

### 1. Field

Aspects of embodiments of the present disclosure relate to a method and mold for sealing pouch-type batteries and a pouch-type battery.

### 2. Description of the Related Art

Different from primary batteries that are not designed to be charged, secondary batteries are designed to be discharged and recharged. Low-capacity secondary batteries are used in small, portable electronic devices, such as smart phones, feature phones, notebook computers, digital cameras, and camcorders, while large-capacity secondary batteries are widely used as power sources for driving motors, such as in hybrid vehicles or electric vehicles, and for power storage. A secondary battery may generally include an electrode assembly including (or consisting of) a positive electrode plate and a negative electrode plate, a case accommodating the electrode assembly, and an electrode terminal connected to the electrode assembly.

A pouch-type battery includes an electrode assembly and a pouch that accommodates the electrode assembly. From among conventional pouch cell assembly processes, a sealing process is a process of sealing two pouches (e.g., two pouch halves) by hot pressing. However, if the sealing is insufficiently performed, water may penetrate into pouches, especially in a high-temperature and high-humidity environment, which may cause issues, such as leakage of the pouches, water penetration into cells, or swelling.

The above information disclosed in this Background section is for enhancement of understanding of the background of the present disclosure, and therefore, it may contain information that does not constitute the related (or prior) art.

### SUMMARY

Embodiments of the present disclosure are directed to a method and mold for sealing pouch-type batteries that ensures reliable pouch sealing and a pouch-type battery manufactured by using the method and mold.

Embodiments of the present disclosure are also directed to a method and mold for sealing pouch-type batteries, which prevent or reduce pouch leakage, water penetration, and swelling phenomena, and a pouch-type battery manufactured by using the method and mold.

However, aspects and features of the present disclosure are not limited to those discussed above, and other aspects and features not mentioned herein, will be clearly understood by those skilled in the art from the description of the present disclosure below.

According to an embodiment of the present disclosure, a method of sealing a pouch-type battery is provided. The pouch-type battery includes a pouch having a sealing part and an electrode assembly receiving part. The method includes a top sealing operation including sealing an upper region of the sealing part above the electrode assembly receiving part, a post-electrolyte-injection sealing operation including sealing a region of the sealing part at one side of the electrode assembly receiving part (or one side of the sealing part along the electrode assembly receiving part) after injecting an electrolyte into an electrode assembly (accommodated in the electrode assembly receiving part), and a post-degassing sealing operation including sealing a remaining region of the sealing part at (or along) another side opposite to the one side of the electrode assembly receiving part after removing (or degassing to remove) gas from the electrode assembly receiving part. In the top sealing operation, a gap between the sealing part and the electrode assembly receiving part is substantially the same at each upper corner of the electrode assembly receiving part and along (or at) the upper region between the upper corners of the electrode assembly receiving part.

The top sealing operation may be performed using a top sealing mold. The top sealing mold may have a contact part configured to contact the pouch and to apply pressure thereto for sealing the sealing part and a body configured to support the contact part. The contact part may have a curvature formation portion at each of both corners thereof.

The curvature formation portion may form a curvature portion at a portion of the sealing part corresponding to the corner of the electrode assembly receiving part such that the gap between the sealing part and the electrode assembly receiving part is substantially the same at the corner of the electrode assembly receiving part and at other regions thereof.

The curvature formation portion may have substantially the same radius of curvature as the corner of the electrode assembly receiving part.

The contact part may have an upper region configured to seal an upper portion of the pouch and two protruding regions protruding downwardly from the upper region to extend around the upper corners of the electrode assembly receiving part. The curvature formation portion may be formed at the corner of the contact part where each of the protruding regions and the upper region meet.

The post-electrolyte-injection sealing operation may be performed to seal one side of the sealing part along the electrode assembly receiving part, a side of an auxiliary space of the pouch for electrolyte injection and degassing, and a protruding region protruding to a length from the other upper and lower portions of the electrode assembly receiving part.

The post-degassing sealing operation may be performed to seal the sealing part at the other side (or other unsealed side) of the electrode assembly receiving part.

According to another embodiment of the present disclosure, a mold for sealing a pouch-type battery is provided. The mold includes a contact part configured to come into contact with a pouch and to apply pressure thereto for sealing a sealing part of the pouch and a body configured to support the contact part. The contact part has a curvature formation portion formed at each of both corners thereof.

The curvature formation portion may form a curvature portion at a portion of the sealing part corresponding to each corner of an electrode assembly receiving part (of the pouch) such that a gap between the sealing part and the electrode assembly receiving part is substantially the same at the corner of the electrode assembly receiving part and at other regions thereof.

The curvature formation portion may have substantially the same radius of curvature as each corner of the electrode assembly receiving part.

The contact part may have an upper region configured to seal an upper portion of the sealing part and two protruding regions protruding downwardly from the upper region to extend around upper corners of the electrode assembly receiving part. The curvature formation portion may be formed at the corner of the contact part where each of the protruding regions and the upper region meet.

According to another embodiment of the present disclosure, a pouch-type battery includes an electrode assembly and a pouch accommodating the electrode assembly. The pouch may have a sealing part and an electrode assembly receiving part. The pouch is sealed by a method of sealing pouch-type batteries, the method including: a top sealing operation including sealing an upper region of a sealing part above an electrode assembly receiving part, a post-electrolyte-injection sealing operation including sealing a region of the sealing part at one side of the electrode assembly receiving part (or one side of the electrode assembly receiving part) after injecting an electrolyte into the electrode assembly (accommodated in the electrode assembly receiving part), and a post-degassing sealing operation including sealing (the sealing part at) a remaining side of the electrode assembly receiving part after degassing to remove gas from the electrode assembly receiving part. In the top sealing operation, a gap between the sealing part and the electrode assembly receiving part is substantially the same at each upper corner of the electrode assembly receiving part and at the upper region between the upper corners of the electrode assembly receiving part.

The top sealing operation may be performed by using a top sealing mold. The top sealing mold may have a contact part configured to contact the pouch and to apply pressure thereto for sealing the sealing part and a body configured to support the contact part. The contact part may have a curvature formation portion formed at each of both corners thereof.

The curvature formation portion may form a curvature portion at a portion of the sealing part corresponding to the corner of the electrode assembly receiving part such that the gap between the sealing part and the electrode assembly receiving part is substantially the same at the corner of the electrode assembly receiving part and at other regions thereof.

The curvature formation portion may have substantially the same radius of curvature as the corner of the electrode assembly receiving part.

The contact part may have an upper region configured to seal an upper portion of the sealing part and two protruding regions protruding downwardly from the upper region to extend around the upper corners of the electrode assembly receiving part. The curvature formation portion may be formed at the corner of the contact part where each of the protruding regions and the upper region meet.

The post-electrolyte-injection sealing operation may be performed to seal one side of the (sealing part along the) electrode assembly receiving part, a side of an auxiliary space of the pouch for electrolyte injection and degassing, and a protruding region protruding to a length from the other upper and lower portions of the electrode assembly receiving part.

The post-degassing sealing operation may be performed to seal (sealing part along) the other side of the electrode assembly receiving part.

At least some of the above and other features of the invention are set out in the claims.

Aspects and features of the present disclosure are not limited to those described above, and other aspects and features not specifically mentioned herein will be clearly understood by those skilled in the art from the description of the present disclosure below.

### BRIEF DESCRIPTION OF THE DRAWINGS

The following drawings attached to this specification illustrate embodiments of the present disclosure and provide a further understanding of the present disclosure along with the aforementioned contents of the disclosure. Accordingly, the present disclosure should not be construed as being limited to contents described in the drawings, in which:
FIG. 1 is a partial exploded perspective view of a pouch-type battery;
FIG. 2 is a schematic view illustrating a sealing process of the pouch-type battery;
FIG. 3 is illustrates a sealing region of the pouch-type battery to be sealed according to a method according to an embodiment of the present disclosure;
FIG. 4 is a flowchart describing a method of sealing pouch-type batteries according to an embodiment of the present disclosure;
FIGS. 5A and 5B respectively illustrate front and right side views of a top sealing mold used in a method of sealing pouch-type batteries according to an embodiment of the present disclosure;
FIG. 6 illustrates a region to be sealed in a top sealing step;
FIG. 7 is an enlarged view of the region indicated by the dotted line circle in FIG. 6;
FIG. 8 illustrates a region to be sealed in a post-electrolyte-injection sealing step;
FIG. 9 is an enlarged view of the region indicated by the dotted line circle in FIG. 8;
FIG. 10 illustrates a region to be sealed in a post-degassing sealing step;
FIG. 11 is an enlarged view of the region indicated by the dotted line circle in FIG. 10;
FIG. 12 is a graph measuring a phenomenon of thickness swelling after high temperature and high humidity in a pouch-type battery sealed by a method according to the related art;
FIG. 13 is a graph measuring a phenomenon of thickness swelling after high temperature and high humidity in the pouch-type battery sealed by the method according to embodiments of the present disclosure; and
FIG. 14 is illustrates a sealing region of the pouch-type battery to be sealed according to a related art method.

### DETAILED DESCRIPTION

Embodiments of the present disclosure will be described below, in detail, with reference to the accompanying drawings. Prior to the description, it is noted that the terms or words used in this specification and claims should not be construed as being limited to their common or dictionary meanings but instead should be understood to have meanings and concepts in agreement with the present disclosure based on the principle that an inventor can define the concept of each term suitably in order to describe his/her own invention in the best way possible. Because the embodiments described in this specification and the configurations illustrated in the drawings are examples of the present disclosure and do not cover all the technical ideas of the present disclosure, it should be understood that various changes and modifications may be made at the time of filing this application.

It will be further understood that the terms "comprises/includes" and/or "comprising/including" when used herein, specify the presence of stated features, integers, steps, operations, elements, components, and/or groups thereof, but do not preclude the presence or addition of one or more other features, integers, steps, operations, elements, components, and/or groups thereof.

To facilitate understanding of the present disclosure, the accompanying drawings may not be drawn to scale and the dimensions of some components may be exaggerated. It should be noted that the same reference numerals designate the same components in different embodiments.

Reference to two compared elements, features, etc. as being "the same" means that they are "substantially the same". Therefore, the phrase "substantially the same" may include a deviation that is considered low in the art, for example, a deviation of about 5% or less. The uniformity of any parameter in a given region may mean that it is uniform from an average perspective.

Although the terms such as "first" and/or "second" are used to describe various components, these components are not limited by these terms, of course. These terms are only used to distinguish one component from another component. Thus, unless specifically stated to the contrary, a first component may be termed a second component without departing from the teachings of embodiments.

Throughout the specification, unless otherwise stated, each element may be singular or plural.

Arrangement of any component "above (or below)" or "on (or under)" a component may mean that any component is disposed in contact with the upper (or lower) surface of the component, as well as that other components may be interposed between the element and any element disposed on (or under) the element.

It will be understood that, when a component is referred to as being "connected", "coupled", or "joined" to another component, not only can it be directly "connected", "coupled", or "joined" to the other element, but also can it be indirectly "connected", "coupled", or "joined" to the other element with other elements interposed therebetween.

As used herein, the term "and/or" includes any and all combinations of one or more of the associate listed items. The use of "may" when describing embodiments of the present disclosure relates to "one or more embodiments of the present disclosure". Expressions such as "at least one" and "one or more" preceding a list of elements modify the entire list of elements and do not modify the individual elements in the list.

Throughout the specification, when "A and/or B" is stated, it means A, B, or A and B, unless otherwise stated. In addition, when "C to D" is stated, it means C or more and D or less, unless specifically stated to the contrary.

When the phrase such as "at least one of A, B, and C", "at least one of A, B, or C", "at least one selected from the group of A, B, and C", or "at least one selected from among A, B, and C" is used to designate a list of elements A, B, and C, the phrase may refer to any and all suitable combinations.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, region, layer, or section discussed below may be termed a second element, component, region, layer, or section without departing from the teachings of embodiments.

For ease of explanation in describing the relationship of one element or feature to another element(s) or feature(s) as illustrated in the drawings, spatially relative terms such as "beneath", "below", "lower", "above", and "upper" may be used herein. It will be understood that spatially relative positions are intended to encompass different directions of the device in use or operation in addition to the direction depicted in the drawings. For example, if the device in the drawings is turned over, any element described as being "below" or "beneath" another element would then be oriented "above" or "over" another element. Therefore, the term "below" may encompass both upward and downward directions.

The terminology used herein is for the purpose of describing embodiments of the present disclosure and is not intended to limit the present disclosure.

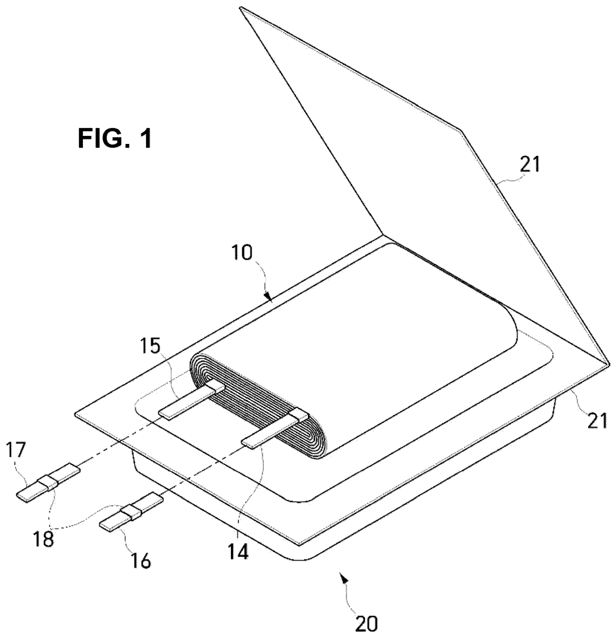

FIG. 1 is a partial exploded perspective view of a pouch-type battery.

The pouch-type secondary battery includes an electrode assembly 10 and a pouch 20 accommodating the electrode assembly 10.

A first electrode tab 14 and a second electrode tab 15 of the electrode assembly 10, as shown in FIG. 1, are respectively welded to a first electrode lead 16 and a second electrode lead 17 of an external terminal to be electrically connected to the outside (e.g., to an external device or circuit). A tab film 18 for insulation from the pouch 20 is attached to the first electrode lead 16 and the second electrode lead 17.

When the electrode assembly 10 is accommodated in the pouch 20, sealing parts 21 at edges of the pouch 20 come into contact with each other to be sealed. The sealing is performed in a state in which the tab film 18 is disposed between the sealing parts 21. The sealing part 21 at the bottom portion of the pouch 20 as well as at the top portion of the pouch 20 may be made of a heat-fusible material and may have a structure in which sealing is achieved by bonding heat-fusible layers to each other. Because the heat-fusible material generally exhibits weak adhesion to metal, the tab film 18 in the form of a thin film is provided to be fused to the pouch 20.

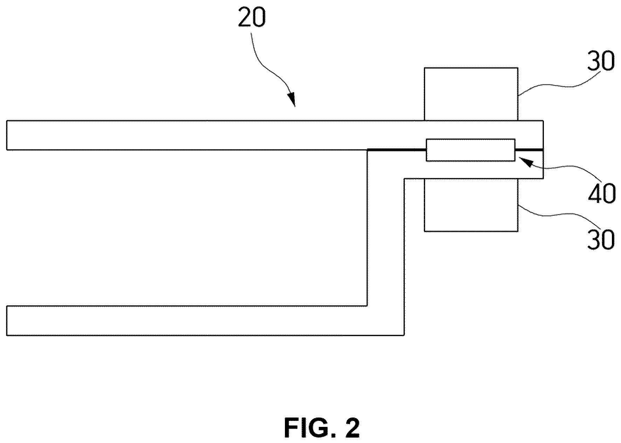

FIG. 2 is a schematic view illustrating a sealing process of the pouch-type battery. From among pouch cell assembly processes, the sealing process is a process of sealing two pouches 20 by hot pressing. In other words, as illustrated in FIG. 2, a mold 30 is used to heat and press a thermal fusion part 40 interposed between the two pouches 20 (e.g., between the two pouch halves).

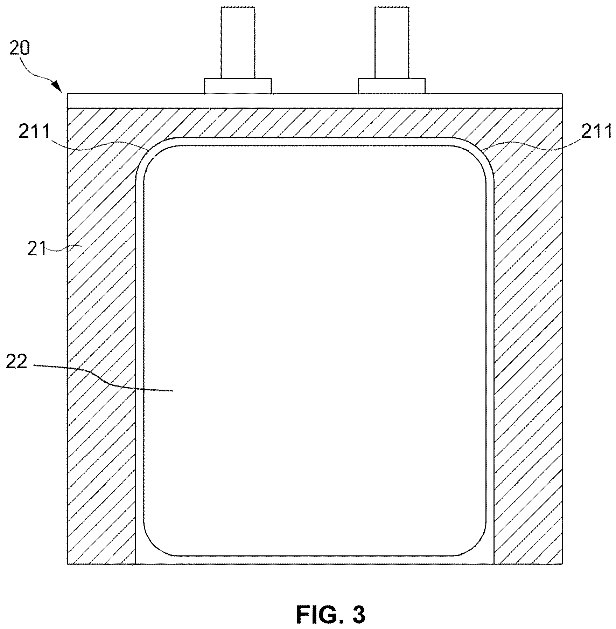

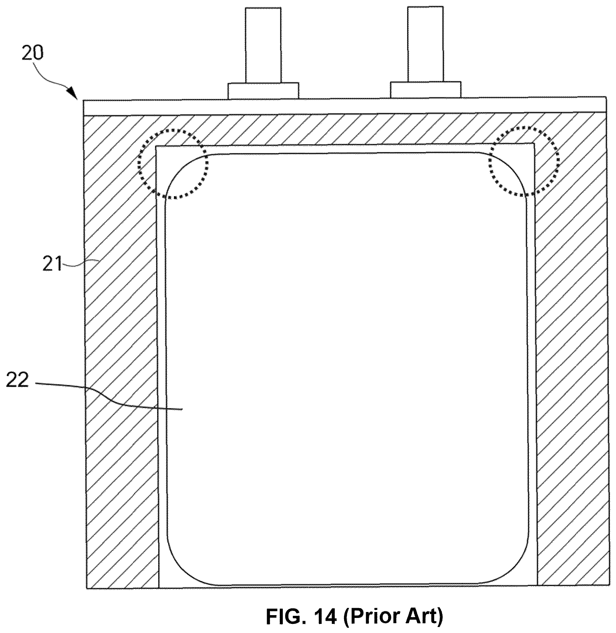

FIG. 3 is a view illustrating a sealing region of the pouch-type battery to be sealed by using a method according to an embodiment of the present disclosure. FIG. 14 is a view illustrating a sealing region of a pouch-type battery to be sealed by a method according to the related art.

Conventionally, referring to FIG. 14, a sealing part 21 is formed next to (or along) three sides of an electrode assembly receiving part (or electrode assembly receiving area) 22. In addition, the electrode assembly receiving part 22 may have a curved corner. Accordingly, as indicated by the circles in FIG. 14, a gap between the sealing part 21 and the electrode assembly receiving part 22 is relatively larger at the corners of the electrode assembly receiving part 22 compared to at other regions thereof. Hence, the likelihood of swelling phenomena in the corners may increase. On the other hand, for the gap between the sealing part 21 and an electrode assembly receiving part 22 to be similar at the corners of the electrode assembly receiving part 22 as at other regions thereof, as illustrated in FIG. 3, according to embodiments of the present disclosure, the sealing part 21 is formed with (e.g., has) a curvature portion 211.

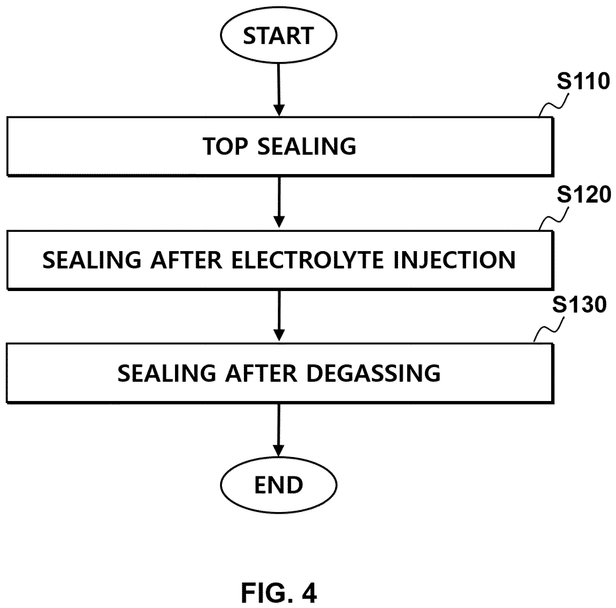

A method of sealing pouch-type batteries according to an embodiment of the present disclosure will be described in a process sequence with reference to FIGS. 4 to 11.

FIG. 4 is a flowchart describing a method of sealing pouch-type batteries according to an embodiment of the present disclosure. The method of sealing pouch-type batteries according to an embodiment of the present disclosure includes a top sealing step S110 of sealing an upper region of a sealing part 21 over an electrode assembly receiving part 22, a post-electrolyte-injection sealing step S120 of sealing a region of the sealing part at one side of the electrode assembly receiving part 22 after injecting an electrolyte into an electrode assembly, and a post-degassing sealing step S130 of sealing a remaining region of the sealing part at another side opposite to the one side of the electrode assembly receiving part 22 after degassing to remove gas from the electrode assembly receiving part 22.

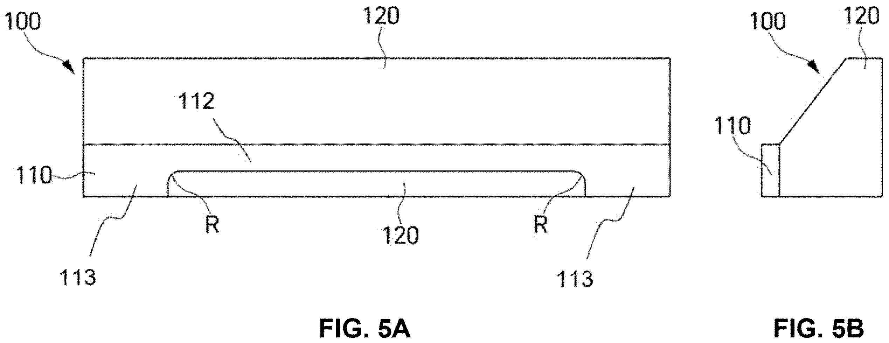

For the top sealing step S110, a mold as illustrated in, for example, FIG. 5A and FIG. 5B, is used. FIG. 5A and FIG. 5B illustrate, respectively, a front view and a right side view of a top sealing mold according to an embodiment of the present disclosure.

The top sealing mold, which is designated by reference numeral 100, includes a contact part 110 that comes into contact with a pouch to apply pressure to the pouch, and a body 120 that supports the contact part 110. The contact part 110 comes into contact with a region of the pouch to be sealed and applies pressure thereto for sealing that region. The contact part 110 includes an upper region 112 that seals the upper portion of the pouch, and two protruding regions 113 that protrude downwardly from the upper region 112 to surround (e.g., to extend around) the upper corners of the electrode assembly receiving part 22. The contact part 110 has a curvature formation portion R formed at the corner thereof where each protruding region 113 and the upper region 112 meet.

The curvature formation portion R forms a curvature portion at a portion of the sealing part corresponding to the corner of the electrode assembly receiving part so that a gap between the sealing part 21 and the electrode assembly receiving part 22 at the corner of the electrode assembly receiving part is substantially the same as a gap at other regions thereof. In one embodiment, the curvature formation portion R has substantially the same radius of curvature as the corner of the electrode assembly receiving part 22. For example, when the radius of curvature of the corner of the electrode assembly receiving part 22 is 1.3, the radius of curvature of the curvature formation portion R is 1.3.

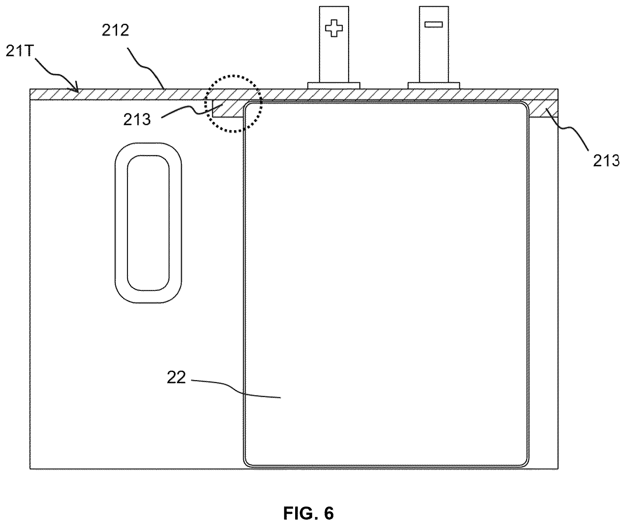

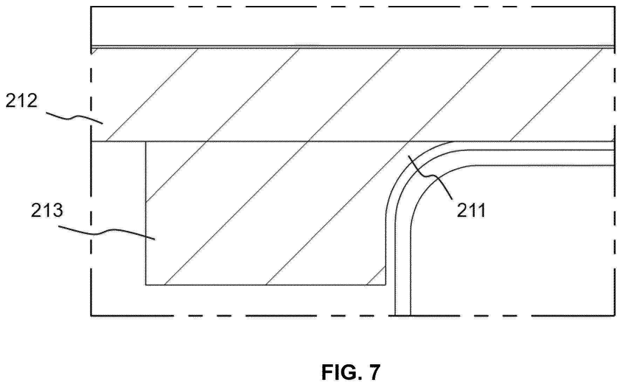

FIG. 6 illustrates a region to be sealed in the top sealing step. FIG. 7 is an enlarged view of the area in FIG. 6 indicated by the dotted circle. A top sealing region 21T to be sealed in the top sealing step S110 includes an upper region 212 that is sealed along the upper portion of the pouch and a protruding region 213 that protrudes downwardly from the upper region 212 to surround (e.g., to extend around) each upper corner of the electrode assembly receiving part 22. The protruding region 213 has a curvature portion 211 on the side thereof facing the corner of the electrode assembly receiving part 22. The curvature portion 211 is a portion having a radius of curvature that ensures that the gap between the sealing part 21 and the electrode assembly receiving part 22 is substantially the same both near the upper corner of the electrode assembly receiving part 22 and at the upper region 212.

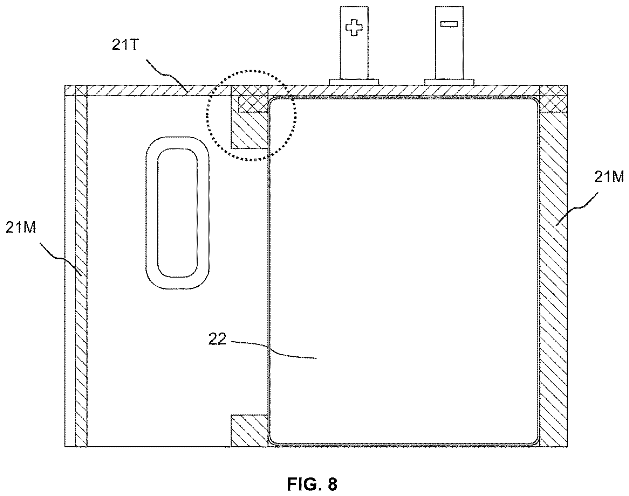

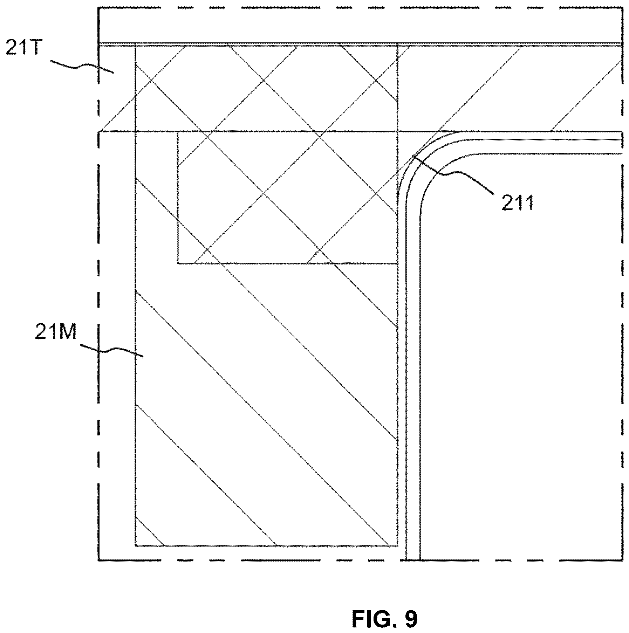

FIG. 8 illustrates a region to be sealed in the post-electrolyte-injection sealing step. FIG. 9 is an enlarged view of the portion of FIG. 8 indicated by the dotted circle. A middle sealing region 21M to be sealed in the post-electrolyte-injection sealing step S120 includes a right side of the electrode assembly receiving part 22, a side of the auxiliary space of the pouch for electrolyte injection and degassing, and a protruding region protruding to a length (e.g., a predetermined length) from the left-side upper and lower portions of the electrode assembly receiving part 22 as shown in, for example, FIG. 8. In FIG. 8, the middle sealing region 21M is indicated by hatching in the opposite direction to the top sealing region 21T. In one embodiment, the gap between the sealing part 21 and the electrode assembly receiving part 22 is the same both at the sealing region on the right side of the electrode assembly receiving part 22 and at the upper region 212.

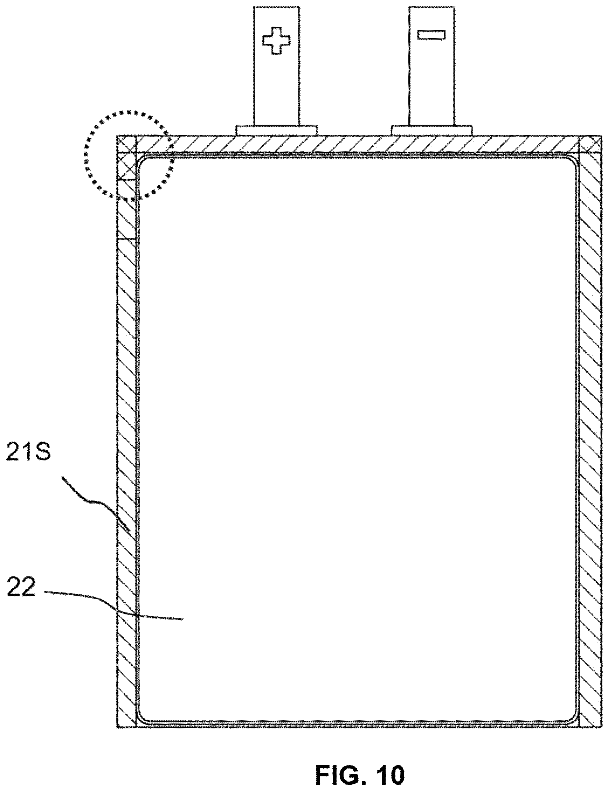

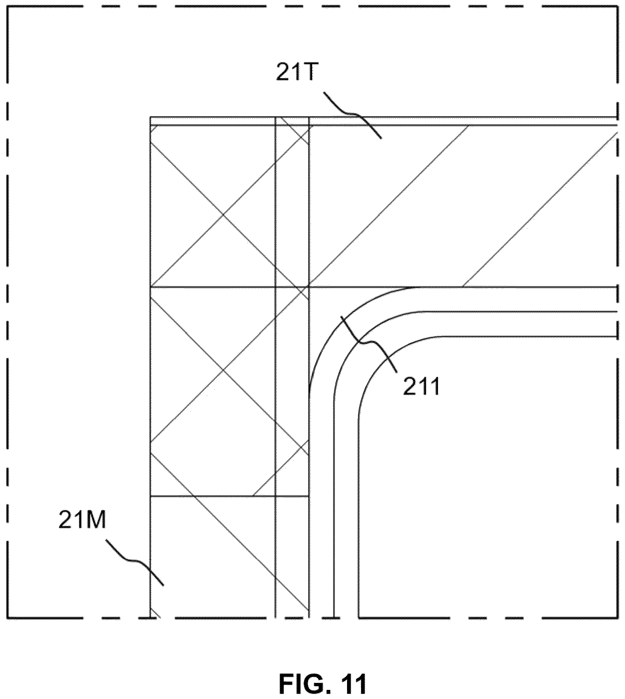

FIG. 10 illustrates a region to be sealed in the post-degassing sealing step. FIG. 11 is an enlarged view of the portion of FIG. 10 indicated by the dotted circle. In the post-degassing sealing step S130, a remaining unsealed portion around the electrode assembly receiving part 22 is sealed after degassing to remove gas from the electrode assembly receiving part 22. A final sealing region 21S to be sealed in the post-degassing sealing step S130 includes an unsealed left side of the electrode assembly receiving part 22 as shown in, for example, FIG. 10. Even in the post-degassing sealing step S130, the sealing is performed such that the gap between the sealing part 21 and the electrode assembly receiving part 22 is the same both at the final sealing region and at the upper region 212.

Through these processes, the three sides of the electrode assembly receiving part 22 have been sealed, and the gap between the sealing part 21 and the electrode assembly receiving part 22 is maintained constant at all regions including the corner of the electrode assembly receiving part 22. Accordingly, in one practical example according to the present disclosure, the shortest length of the sealing region at the corner of the electrode assembly receiving part 22 was recorded as 1.73 mm on average, while the same measurement was 0.67 mm on average in the method according to the related art. This improves sealing performance at the corner of the pouch, which prevents or reduces pouch leakage, water penetration, swelling phenomena, etc.

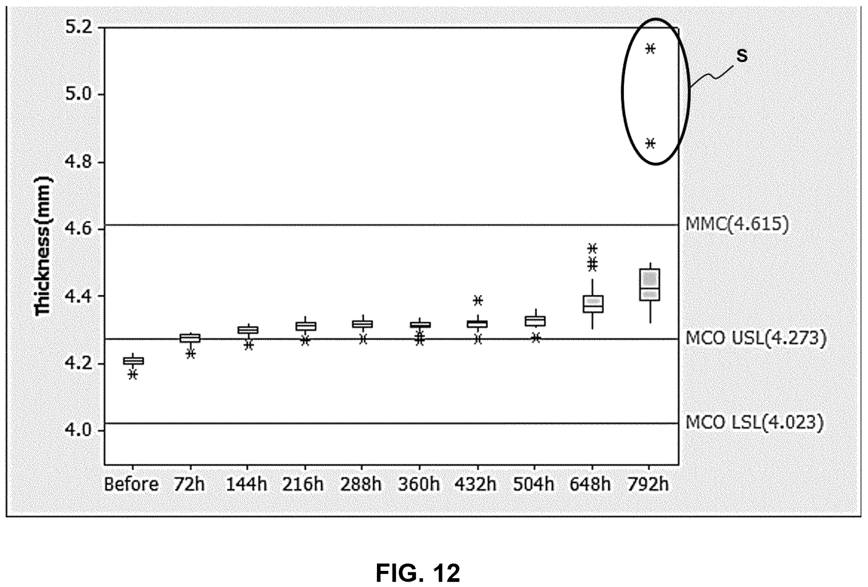

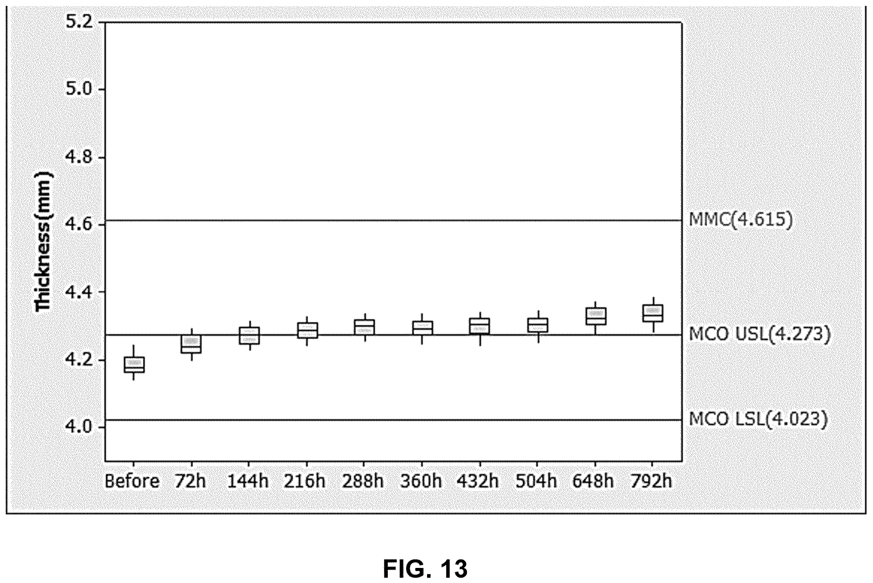

Next, a phenomenon of thickness swelling after high temperature and high humidity exposure is compared between the pouch-type battery sealed by the method according to the above-described embodiment of the present disclosure and the pouch-type battery sealed by the method according to the related art with reference to FIGS. 12 and 13. FIG. 12 is a graph measuring the phenomenon of thickness swelling after high temperature and high humidity exposure in the pouch-type battery sealed by the method according to the related art. FIG. 13 is a graph measuring the phenomenon of thickness swelling after high temperature and high humidity exposure in the pouch-type battery sealed by the method according to the above-described embodiment of the present disclosure.

In the pouch-type battery sealed by the method according to the related art, the phenomenon of thickness swelling occurred after 792 hours as can be seen at the portion indicated by S in the graph shown in FIG. 12. On the other hand, in the pouch-type battery sealed by applying the method according to the above-described embodiment of the present disclosure, the phenomenon of thickness swelling did not occur as can be seen in the graph shown in FIG. 13. As such, it can be seen that the phenomenon of thickness swelling after high temperature and high humidity exposure is prevented or reduced by applying the method according to embodiments of the present disclosure.

As is apparent from the above description, according to embodiments of the present disclosure, the pouch can be sealed more securely by additionally securing the top sealing area of the pouch, thereby enhancing the quality of cells.

In addition, according to embodiments of the present disclosure, pouch leakage, water penetration, and swelling phenomena may be reduced or prevented because the length of the sealing region at the corner of the pouch is increased.

Although the present disclosure has been described above with respect to embodiments thereof, the present disclosure is not limited thereto. Various modifications and variations can be made by those skilled in the art within the present disclosure as defined by the appended claims.

## Claims

1. A method of sealing a pouch-type battery, the pouch-type battery comprising a pouch having a sealing part and an electrode assembly receiving part, the method comprising:
a top sealing operation comprising sealing an upper region of the sealing part above the electrode assembly receiving part;
a post-electrolyte-injection sealing operation comprising sealing a region of the sealing part at one side of the electrode assembly receiving part after injecting an electrolyte into an electrode assembly accommodated in the electrode assembly receiving part; and
a post-degassing sealing operation comprising sealing a remaining region of the sealing part at another side opposite to the one side of the electrode assembly receiving part after removing gas from the electrode assembly receiving part,
wherein, in the top sealing operation, a gap between the sealing part and the electrode assembly receiving part is substantially the same both at each upper corner of the electrode assembly receiving part and along the upper region between the upper corners of the electrode assembly receiving part.

2. The method as claimed in claim 1, wherein the top sealing operation is performed by using a top sealing mold,
wherein the top sealing mold has a contact part configured to contact the pouch and to apply pressure thereto for sealing the same and a body configured to support the contact part, and
wherein the contact part has a curvature formation portion formed at each of both corners thereof.

3. The method as claimed in claim 2, wherein the curvature formation portion forms a curvature portion at a portion of the sealing part corresponding to the corner of the electrode assembly receiving part such that the gap between the sealing part and the electrode assembly receiving part is substantially the same at the corner of the electrode assembly receiving part and at other regions thereof.

4. The method as claimed in claim 2 or claim 3, wherein the curvature formation portion has substantially the same radius of curvature as the corner of the electrode assembly receiving part; and, optionally, wherein the contact part has an upper region configured to seal an upper portion of the pouch and two protruding regions protruding downwardly from the upper region to extend around the upper corners of the electrode assembly receiving part, and
wherein the curvature formation portion is at the corner of the contact part where each of the protruding regions and the upper region meet.

5. The method as claimed in any preceding claim, wherein, in the post-electrolyte-injection sealing operation, one side of the electrode assembly receiving part, a side of an auxiliary space of the pouch for electrolyte injection and degassing, and a protruding region protruding to a length from the other upper and lower portions of the electrode assembly receiving part are sealed; and, optionally , wherein, in the post-degassing sealing operation, the other unsealed side of the electrode assembly receiving part is sealed.

6. A mold for sealing a pouch-type battery, the pouch-type battery comprising a pouch comprising a sealing part and an electrode assembly receiving part, the mold comprising:
a contact part configured to contact the pouch and to apply pressure thereto for sealing the sealing part of the pouch; and
a body configured to support the contact part,
wherein the contact part has a curvature formation portion at each of both corners thereof.

7. The mold as claimed in claim 6, wherein the curvature formation portion forms a curvature portion at a portion of the sealing part corresponding to each corner of the electrode assembly receiving part such that a gap between the sealing part and the electrode assembly receiving part is substantially the same at the corner of the electrode assembly receiving part and at other regions thereof.

8. The mold as claimed in claim 6 or claim 7, wherein the curvature formation portion has substantially the same radius of curvature as each corner of the electrode assembly receiving part.

9. The mold as claimed in any of claims 6 to 8, wherein the contact part comprises an upper region configured to seal an upper portion of the pouch and two protruding regions protruding downwardly from the upper region to extend around upper corners of the electrode assembly receiving part, and
wherein the curvature formation portion is at the corner of the contact part where each of the protruding regions and the upper region meet.

10. A pouch-type battery comprising:
an electrode assembly; and
a pouch accommodating the electrode assembly, the pouch having a sealing part and an electrode assembly receiving part, the pouch being sealed by a method of sealing a pouch-type battery, the method comprising:
a top sealing operation comprising sealing an upper region of the sealing part above the electrode assembly receiving part;
a post-electrolyte-injection sealing operation comprising sealing a region of the sealing part at one side of the electrode assembly receiving part after injecting an electrolyte into the electrode assembly; and
a post-degassing sealing operation comprising sealing a remaining region of the sealing part at another side opposite to the one side of the electrode assembly receiving part after degassing to remove gas from the electrode assembly receiving part, and
wherein, in the top sealing operation, a gap between the sealing part and the electrode assembly receiving part is substantially the same at each upper corner of the electrode assembly receiving part and at the upper region between the upper corners of the electrode assembly receiving part.

11. The pouch-type battery as claimed in claim 10, wherein the top sealing operation is performed by using a top sealing mold,
wherein the top sealing mold has a contact part configured to contact the pouch and to apply pressure thereto for sealing the sealing part and a body configured to support the contact part, and
wherein the contact part has a curvature formation portion at each of both corners thereof.

12. The pouch-type battery as claimed in claim 11, wherein the curvature formation portion forms a curvature portion at a portion of the sealing part corresponding to the corner of the electrode assembly receiving part such that the gap between the sealing part and the electrode assembly receiving part is substantially the same at the corner of the electrode assembly receiving part and at other regions thereof.

13. The pouch-type battery as claimed in claim 11 or 12, wherein the curvature formation portion has substantially the same radius of curvature as the corner of the electrode assembly receiving part.

14. The pouch-type battery as claimed in claim 13, wherein the contact part has an upper region configured to seal an upper portion of the pouch and two protruding regions protruding downwardly from the upper region to extend around the upper corners of the electrode assembly receiving part, and
wherein the curvature formation portion is at the corner of the contact part where each of the protruding regions and the upper region meet.

15. The pouch-type battery as claimed in any of claims 11 to 14, wherein the post-electrolyte-injection sealing operation is performed to seal one side of the electrode assembly receiving part, a side of an auxiliary space of the pouch for electrolyte injection and degassing, and a protruding region protruding to a length from the other upper and lower portions of the electrode assembly receiving part; and, optionally, wherein the post-degassing sealing operation is performed to seal the other side of the electrode assembly receiving part.
